# EUROPEAN PATENT APPLICATION

(11) **EP 1 553 285 A1**
(43) Date of publication of application: **13.07.2005**
(21) Application number: 03733274.9
(22) Date of filing: 03.06.2003
(51) Int. Cl.: F02M 37/10, F02M 37/20, F02M 37/22

(54) **FUEL PUMP WITH FILTER AND FUEL FILTER**

(30) Priority: 19.06.2002 JP 2002178013
(71) Applicant: MIKUNI CORPORATION, Chiyoda-ku, Tokyo 101-0021 (JP)
(72) Inventor: MAITA, Katsuya, c/o MIKUNI CORPORATION, Iwate-gun, Iwate 020-0188 (JP); TERUI, Takuya, c/o MIKUNI CORPORATION, Iwate-gun, Iwate 020-0188 (JP)
(74) Representative: Beyer, Andreas, Dr.
(86) International application number: PCT/JP2003/006998
(87) International publication number: WO 2004/001216

(57) **Abstract**

The object of the present invention is to provide a filter-equipped fuel pump and fuel filter which can reduce the amount of vapor sucked into a fuel pump and prevent insufficient pressurizing and insufficient discharging, by ejecting the vapor in the filter to the outside of the filter.

As shown in Fig. 1, the vapor eject opening 23 of the attachment member 2 is constructed to connect the space between the first layer filter 3 and the second layer filter 4 with the fuel tank, and is disposed at the upper side of the room between the first layer filter 3 and the second layer filter 4. The vapor eject valve 6, which is a circular plate made of resin etc. that has higher specific gravity than that of the fuel in the fuel tank, usually closes the vapor eject opening 23 with the weight of itself, and opens the vapor eject opening 23 with buoyancy of the vapor accumulated at the room between the first layer filter 3 and the second layer filter 4.

## Description

### BACKGROUND OF THE INVENTION

### 1. Field of the Invention

The present invention relates to a filter-equipped fuel pump and fuel filter which supplies fuel to an internal combustion engine, more particularly relates to a small flow rate returnless type filter-equipped fuel pump and fuel filter in which the fuel supplied to an internal combustion engine is not returned to a fuel tank.

### 2. Description of the Related Art

When vapor contained in fuel is sucked by a fuel pump, deleterious effects occur to driving characteristics of an internal combustion engine. Therefore, the vapor has to be removed before fuel is sucked by the fuel pump. Japanese Patent Laid-open H7-180632 disclosed a large flow rate turbine type pump, wherein a return fuel room to which return fuel is returned is formed in the vicinity of a filter that covers an inlet port (a suck port) of the fuel pump, and the vapor is ejected through a vapor eject portion that is disposed at an upper wall of the return fuel room.

Conventionally, the vapor accumulated in the filter is not cared. With a large flow rate turbine type fuel pump, it does not cause a big problem to suck fuel with the vapor accumulated in the filter. However, with a small flow rate returnless type fuel pump, the vapor accumulated in the filter causes problems of insufficient pressurizing and insufficient discharging.

Further, in the conventional art, the vapor eject portion disposed at the upper wall of the return fuel room is opened and closed by the return fuel pressure. Because it is not constructed so that the vapor is ejected in accordance with the vapor amount, there is a problem that the accumulated vapor is not ejected effectively.

The present invention was devised in the light of the abovementioned problems. The object is to provide a filter-equipped fuel pump and fuel filter which can reduce the amount of the vapor sucked into a fuel pump and prevent insufficient pressurizing and insufficient discharging, by ejecting the vapor in the filter to the outside of the filter.

### SUMMARY OF THE INVENTION

To solve the above-mentioned problems, the present invention adopts the following structure.

The outline of claim 1 of the present invention is a filter-equipped fuel pump to suck fuel from a fuel tank, comprising a suck port through which the fuel is sucked from the fuel tank, a first filter which covers the suck port, a second filter which is disposed in the first filter and covers the suck port, an opening part which connects a room between the first filter and the second filter with the fuel tank, and a vapor eject valve which is disposed at the opening part and opens and closes in accordance with buoyancy of the vapor in the room between the first filter and the second filter.

The outline of claim 2 of the present invention is the filter-equipped fuel pump according to claim 1, wherein the specific gravity of the vapor eject valve is higher than the specific gravity of the fuel.

The outline of claim 3 is the filter-equipped fuel pump according to claim 1 or claim 2, wherein the opening pressure P at which the vapor eject valve opens is set to satisfy the inequality of (VA-VB)g/S>P among the volume V of the room between the first filter and the second filter, the fuel density A, the vapor density B, the area S of the opening part and the gravity acceleration g.

The outline of claim 4 is the filter-equipped fuel pump according to any one of claim 1 through 3, wherein the volume of the inside of the second filter is smaller than the volume of the room between the first filter and the second filter.

The outline of claim 5 is the filter-equipped fuel pump according to any one of claim 1 through 3, further comprising an attachment member which attaches the first filter and the second filter to the suck port, wherein the opening part is formed at the attachment member.

Furthermore, the outline of claim 6 is a fuel filter disposed at a suck port of the fuel pump through which fuel is sucked from a fuel tank, comprising a first filter which covers the suck port, a second filter which is disposed in the first filter and covers the suck port, an opening part which connects a room between the first filter and the second filter with the fuel tank, and a vapor eject valve which is disposed at the opening part and opens and closes in accordance with buoyancy of the vapor in the room between the first filter and the second filter.

By constructing to eject the vapor accumulated in the room between the first layer filter and the second layer filter through the vapor eject opening, the filter-equipped fuel pump of the present invention obtains the effect that the vapor flowing into the second layer filter can be removed and the amount of the vapor sucked into the fuel pump can be reduced so that insufficient pressurizing and insufficient discharging are prevented and stable fuel pressure and flow rate are acquired.

Furthermore, with an embodiment of the present invention, by adopting the structure that the specific gravity of the vapor eject valve which opens and closes the vapor eject opening is higher than that of the fuel so that the vapor eject valve is opened with buoyancy of the vapor accumulated at the room between the first layer filter and the second layer filter, there arises an effect that the vapor can be removed efficiently without having a complicated structure and effective removal of the vapor can be acquired with a small flow rate returnless type fuel pump.

### BRIEF DESCRIPTION OF THE DRAWINGS

Fig. 1 is a sectional view showing a structure of a filter-equipped fuel pump and fuel filter of an embodiment of the present invention.
Fig. 2 is a top view showing a structure of the attachment member in Fig.1.
Fig. 3 is a sectional view showing other embodiments of the vapor eject valve of the filter-equipped fuel pump of the present invention.

### DESCRIPTION OF THE PREFFERED EMBODIMENT

An embodiment of the present invention is explained in detail based on the drawings.

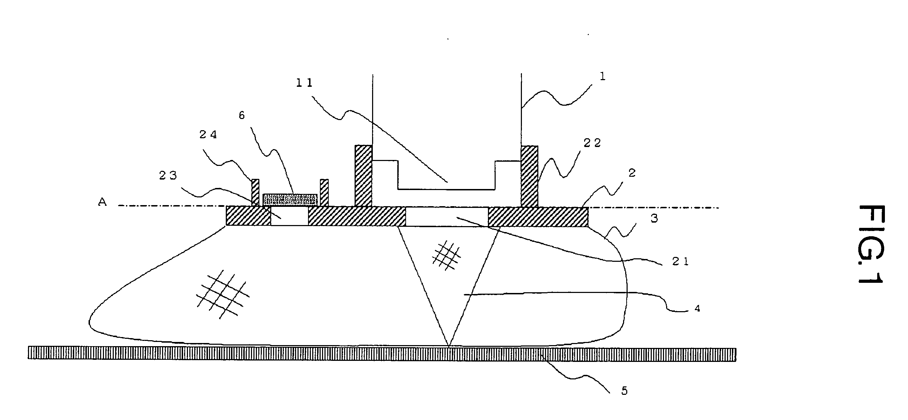

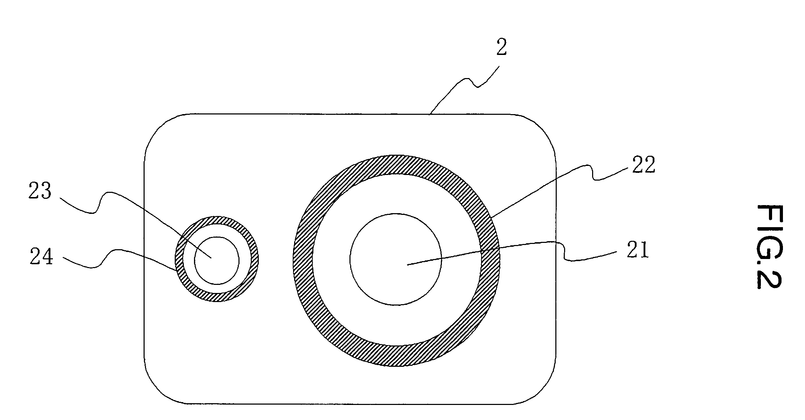

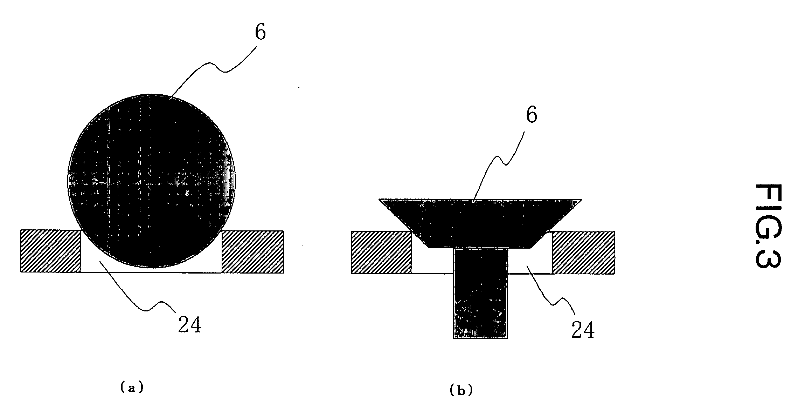

Fig. 1 is a sectional view showing a structure of a filter-equipped fuel pump and fuel filter of an embodiment of the present invention. Fig. 2 is a top view showing a structure of the attachment member in Fig.1. Fig. 3 is a sectional view showing other embodiments of the vapor eject valve of the filter-equipped fuel pump of the present invention.

As shown in Fig. 1 and Fig. 2, in this embodiment, an attachment member 2 is attached to a fuel suck port 11 of a fuel pump 1 which sucks fuel (gasoline etc.) in a fuel tank. A fuel suck opening 21 and a vapor eject opening 23 are formed in the attachment member 2 which is a plate-shaped member made of resin etc. A cylinder-shaped suck port attaching guide 22 which surrounds the fuel suck opening 21 and a cylinder-shaped eject valve guide 24 which surrounds the vapor eject opening 23 are disposed at the upper part (the fuel pump 1 side) of the attachment member 2. The attachment member 2 is fixed to the fuel pump 1 so that the suck port attaching guide 22 covers the fuel suck port 11.

Further, a first layer filter 3 made of nylon mesh which covers the fuel suck opening 21 and the vapor eject opening 23, and a second layer filter 4 made of nylon mesh which covers only the fuel suck opening 21 are disposed at the lower part of the attachment member 2. Consequently, both the first layer filter 3 and the second layer filter 4 cover the fuel suck port 11. Here, the fuel in the fuel tank firstly flows into the room between the first layer filter 3 and the second layer filter 4, then flows into the second layer filter 4, and is sucked from the fuel suck port 11 through the fuel suck opening 21.

As shown in Fig. 1, the first layer filter 3 is fixed to the lower part of the attachment member 2 so as to include the second layer filter 4 inside. The fuel pump 1 is disposed so that the bottom face of the first layer filter 3 has contact with the bottom face 5 of the fuel tank. With this structure, the fuel can flow into the first layer filter 3 efficiently even when the fuel is little in volume in the fuel tank.

As shown in Fig. 1, the second layer filter 4 is cone-shaped and fixed to the lower part of the attachment member 2 so that the bottom face covers the fuel suck opening 21. The cone point extends to the bottom face of the first layer filter 3, and the fuel can be sucked into the second layer filter 4 even when the fuel level of the first layer filter 3 is lowered. When a part of the second layer filter 4 has contact with the fuel, due to capillarity, it entirely gets wet and is covered by a liquid film (a fuel film). Therefore, it is possible to suck the fuel into the second layer filter 4.

Further, the volume of the inside of the second layer filter 4 is formed small to the extent that the performance of the fuel pump 1 is not sacrificed by the sucking resistance. It is smaller than the volume of the room between the first layer filter 3 and second layer filter 4, and quick pressurizing is possible at restarting when the fuel temperature is high. When the fuel is kept at high temperature state, the second layer filter is filled with the vapor, but because the volume is small, the amount of the vapor which is sucked to the fuel pump 1 is reduced.

As shown in Fig. 1, the vapor eject opening 23 of the attachment member 2 is constructed to connect the room between the first layer filter 3 and the second layer filter 4 with the fuel tank, and is disposed at the upper side of the room between the first layer filter 3 and the second layer filter 4.

A vapor eject valve 6 to open and close the vapor eject opening 23 is disposed at the vapor eject opening 23 of the attachment member 2. The position of the vapor eject opening 6 is restricted by the vapor eject guide 24 so as to prevent the vapor eject opening 23 from opening due to the deviation of the vapor eject valve 6 at the closed state of the vapor eject valve 6.

The vapor eject valve 6, which is a circular plate made of resin etc. that has higher specific gravity than that of the fuel in the fuel tank, usually closes the vapor eject opening 23 with the weight of itself, and opens the vapor eject opening 23 with buoyancy of the vapor accumulated at the room between the first layer filter 3 and the second layer filter 4.

To make the vapor eject valve 6 open before the room between the first layer filter 3 and the second layer filter 4 is filled with the vapor, the opening pressure P of the vapor eject valve 6 is set to satisfy the inequality of (VA-VB)g/S>P, wherein V is the volume of the room between the first layer filter 3 and the second layer filter 4, A is the density of the fuel, B is the density of the vapor, S is the area of the vapor eject opening 23, and g is the gravity acceleration. Setting the opening pressure P is a designing item to be done by determining appropriately the specific gravity, shape and size of the vapor eject valve 6, and the opening pressure P is set at the state that the fuel level in the fuel tank is at A shown in Fig. 1.

Here, when the fuel level in the fuel tank is below A shown in Fig. 1, the first layer filter 3 is exposed to the air. In this case, because the surface of the first layer filter 3 is cooled due to the heat of vaporization and the vapor in the room between the first layer filter 3 and the second layer filter 4 is liquefied, it is acceptable that the vapor eject valve 6 does not work and the vapor eject opening 23 remains closed.

In addition, besides the circular plate, the shape of the vapor eject valve 6 can be sphere-shaped as shown in Fig. 3(a) or a poppet type as shown in Fig. 3(b).

As explained above, with this embodiment, by constructing to eject the vapor accumulated in the room between the first layer filter 3 and the second layer filter 4 through the vapor eject opening 23, there arises an effect that the vapor flowing into the second layer filter 4 can be removed and the amount of the vapor sucked into the fuel pump 1 can be reduced so that insufficient pressurizing and insufficient discharging are prevented and stable fuel pressure and flow rate are acquired.

Furthermore, with this embodiment, by adopting the structure that the specific gravity of the vapor eject valve 6 which opens and closes the vapor eject opening 23 is higher than that of the fuel so that the vapor eject valve 6 is opened with buoyancy of the vapor accumulated at the room between the first layer filter 3 and the second layer filter 4, there arises an effect that the vapor can be removed efficiently without having a complicated structure and effective removal of the vapor can be acquired with a small flow rate returnless type fuel pump.

Here, the present invention is not limited to the above-mentioned embodiment, and it is obvious that each embodiment can be modified appropriately within the technical spirit scope of the present invention. Furthermore, numbers, positions, shapes and so on of the above-mentioned component members are not limited to those of the above-mentioned embodiment, appropriate numbers, positions, shapes and so on can be adopted to embody the present invention. Incidentally, in each figure, the same numerical note is given to the same structural element.

### EFFECT OF THE INVENTION

By constructing to eject the vapor accumulated in the room between the first layer filter and the second layer filter through the vapor eject opening, the vapor flowing into the second layer filter can be removed and the amount of the vapor sucked into the fuel pump can be reduced. The filter-equipped fuel pump of the present invention arises an effect that insufficient pressurizing and insufficient discharging are prevented and stable fuel pressure and flow rate are acquired.

Furthermore, with this embodiment, by adopting the structure that the specific gravity of the vapor eject valve which opens and closes the vapor eject opening is higher than that of the fuel so that the vapor eject valve is opened with buoyancy of the vapor accumulated at the room between the first layer filter and the second layer filter, there arises an effect that the vapor can be removed efficiently without having a complicated structure and effective removal of the vapor can be acquired with a small flow rate returnless type fuel pump.

## Claims

1. A filter-equipped fuel pump to suck fuel from a fuel tank, comprising:
a suck port through which said fuel is sucked from said fuel tank;
a first filter which covers said suck port;
a second filter which is disposed in said first filter and covers said suck port;
an opening part which connects a room between said first filter and said second filter with said fuel tank; and
a vapor eject valve which is disposed at said opening part and opens and closes in accordance with buoyancy of vapor in the room between said first filter and said second filter.

2. The filter-equipped fuel pump according to claim 1, wherein the specific gravity of said vapor eject valve is higher than the specific gravity of said fuel.

3. The filter-equipped fuel pump according to claim 1 or claim 2, wherein the opening pressure P at which said vapor eject valve opens is set to satisfy the inequality of (VA-VB)g/S>P among the volume V of the room between said first filter and said second filter, the fuel density A, the vapor density B, the area S of said opening part and the gravity acceleration g.

4. The filter-equipped fuel pump according to any one of claim 1 through 3, wherein the volume of the inside of said second filter is smaller than the volume of the room between said first filter and said second filter.

5. The filter-equipped fuel pump according to any one of claim 1 through 3, further comprising an attachment member which attaches said first filter and said second filter to said suck port, wherein said opening part is formed at said attachment member.

6. A fuel filter disposed at a suck port through which fuel is sucked from a fuel tank, comprising:
a first filter which covers said suck port;
a second filter which is disposed in said first filter and covers said suck port;
an opening part which connects a room between said first filter and said second filter with said fuel tank; and
a vapor eject valve which is disposed at said opening part and opens and closes in accordance with buoyancy of vapor in the room between said first filter and said second filter.
